# EUROPEAN PATENT APPLICATION

(11) **EP 4 389 064 A1**
(43) Date of publication of application: **26.06.2024**
(21) Application number: 22216537.5
(22) Date of filing: 23.12.2022
(51) Int. Cl.: A61C 17/22

(54) **A DENTAL DEVICE FOR PROVIDING ORAL CLEANING**

(71) Applicant: Koninklijke Philips N.V., 5656 AG Eindhoven (NL)
(72) Inventor: BORN, Matthias, Eindhoven (NL); STOFFELS, Monique, Eindhoven (NL); GOTTENBOS, Bart, 5656AG Eindhoven (NL); COOMBS, Jim, Eindhoven (NL)
(74) Representative: Philips Intellectual Property & Standards

(57) **Abstract**

The invention provides a dental device for providing oral cleaning. The dental device comprises a mouthpiece for receiving a subject's teeth. The mouthpiece comprises a brushing portion, for receiving a first set of the subject's teeth, the brushing portion comprising a plurality of brushing elements for providing oral cleaning. Additionally, the mouthpiece comprises a light treatment portion, for receiving a second set of the subject's teeth, the light treatment portion comprising a light emitter for providing light treatment. The brushing portion and the light treatment portion are arranged such that, in use, the brushing elements are arranged outside of an optical path between the light emitter and the second set of the subject's teeth.

## Description

### FIELD OF THE INVENTION

The present invention relates to a dental device for providing improved oral cleaning.

### BACKGROUND OF THE INVENTION

Mouthpiece toothbrushes are a type of toothbrush that can be used "hands-free". Mouthpiece toothbrushes comprise a mouthpiece, for receiving a user's teeth, and a plurality of cleaning elements. The cleaning elements are actuatable to brush the user's teeth when the mouthpiece is received in the user's mouth.

In the field of oral health care, regular brushing of teeth is known to improve dental hygiene. In addition, oral health can be improved by light therapy. Light therapy is associated with several benefits - such as benefits resulting from the anti-microbial effect of light therapy, the anti-inflammatory effect of light therapy, stain removal provided by of light therapy, and supporting teeth whitening. For each of these, a light treatment time of at least tens of seconds to even minutes is needed. Devices for providing oral cleaning by light therapy generally include a light source. To achieve efficient oral cleaning, light from the light source should irradiate the user's teeth and/or gums without being subject to significant attenuation. Accordingly, dental devices for providing light treatment are typically dedicated to that specific purpose.

It would be desirable to provide convenient and effective oral health care.

### SUMMARY OF THE INVENTION

The invention is defined by the claims.

According to examples in accordance with an aspect of the invention, there is provided a dental device for providing oral cleaning, the dental device comprising:
a mouthpiece for receiving a subject's teeth, the mouthpiece comprising:
a brushing portion, for receiving a first set of the subject's teeth, the brushing portion comprising a plurality of brushing elements for providing oral cleaning; and
a light treatment portion, for receiving a second set of the subject's teeth, the light treatment portion comprising a light emitter for providing light treatment;
wherein the brushing portion and the light treatment portion are arranged such that, in use, the brushing elements are arranged outside of an optical path between the light emitter and the second set of the subject's teeth.

The brushing elements are arranged such that light from the light emitter can irradiate the second set of the subject's teeth without interruption by the brushing elements. Accordingly, the dental device can be used to achieve convenient and effective oral cleaning. The brushing elements may be provided only in the brushing portion and not in the light treatment portion. Likewise, the light emitter may be provided only in the light treatment portion and not in the brushing portion.

The first set of teeth comprises different teeth to the second set of teeth.

The brushing portion may, in addition to receiving the first set of the subject's teeth, receive the subject's gums (i.e., tissue surrounding the base of the first set of teeth). The light treatment portion may, in addition to receiving the second set of the subject's teeth, receive the subject's gums (i.e., tissue surrounding the base of the second set of teeth.

The light emitter may be a light source, or a device arranged to receive light from a light source external to the light treatment portion and to emit the received light.

The brushing portion may be arranged to receive teeth associated with a first jaw and the light treatment portion is arranged receive teeth associated with a second jaw.

The brushing portion and the light treatment portion may be arranged to treat teeth belonging to different jaws at the same time. For example, the brushing portion may be arranged to treat teeth belonging to the user's upper jaw while the light treatment portion may be arranged to treat teeth belonging to the user's lower jaw.

The brushing portion may be shaped to receive a sub-set of teeth associated with the first jaw and the light treatment portion is shaped to receive a sub-set of teeth associated with the second jaw.

With this arrangement, the dental device can be used to treat a sub-set of teeth (e.g., one side of a user's jaw) at a time can help to provide a compact arrangement, improving user comfort.

The brushing portion and the light treatment portion may be arranged to receive teeth associated with the same jaw.

For example, the brushing portion may be arranged to treat teeth on the left side of the user's jaw while the light treatment portion is arranged to treat teeth on the right side of the user's jaw.

The dental device may further comprise a connector, wherein the connector is operable to attach the brushing portion and the light treatment portion together.

The connector may releasably attach the brushing portion and the light treatment. This may help to improve the sustainability and cost-effectiveness of the device.

The brushing portion and the light treatment portion to each other via the connector. Alternatively, the brushing portion and the light treatment portion may each be attached, by the connector, to another entity (e.g., they may be connected to a handle).

The mouthpiece may comprise a monolithic mouthpiece body and the brushing portion and the light treatment portion are regions of the mouthpiece body.

Providing the brushing portion and the light treatment portion as regions of a monolithic body may be improve simplicity of manufacture.

The mouthpiece may comprise a base, an upper teeth-receiving portion on a first side of the base, and a lower teeth receiving portion arranged on a second side of the base, wherein the upper teeth receiving portion defines either the brushing portion or the light treatment portion and the lower teeth receiving portion defines the other of the brushing portion and the light treatment portion.

The mouthpiece may comprise an arc-shaped portion for receiving a subset of the subject's teeth, wherein the arc-shaped portion comprises a body of flexible material such that the arc-shaped portion is deformable, the arc-shaped portion having a first configuration, in which the arc-shaped portion is shaped to receive a sub-set of the subject's teeth associated with a first jaw and a second configuration in which the arc-shaped portion is shaped to receive a second sub-set of the subject's teeth associated with the first jaw.

The first sub-set of teeth comprises different teeth to the second sub-set of teeth. The shape of the body of the arc shaped portion in the second configuration may mirror the shape of the body in the first configuration, to allow the subject to use the same portion on teeth associated with different sides of the subject's jaw.

The teeth cleaning elements may comprise bristles.

The light emitter may be configured to emit light at wavelengths for providing oral care.

The light emitter may be configured to emit light at wavelengths for providing oral cleaning and/or other types of oral care such as whitening and/or anti-inflammatory treatment.

The dental device may further comprise a mounting arrangement for mounting the mouthpiece to a driving handle.

The dental device may further comprise a power source coupled to the light emitter.

The power source may be electrically coupled to the light source of the light emitter. The power source can be integrated into the driving handle. Alternatively, the power source may be external to the driving handle.

The dental device may further comprise an attachment member for removably attaching the power source to the mouthpiece, wherein the attachment member is arranged to attach the power source to the mouthpiece.

The dental device may further comprise a transducer arrangement for moving the brush elements and a switching arrangement operably coupled to the power source, the transducer arrangement and the light emitter to independently supply power to the transducer arrangement and the light emitter.

The light emitter may comprise a light source arranged in the light treatment portion, and preferably wherein the light source comprises an LED array.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 illustrates a partial view of an example of a dental device according to one or more embodiments of the invention;
Fig. 2 illustrates the dental device of Fig. 1, including a light treatment portion;
Fig. 3 illustrates another example of a dental device according to one or more embodiments of the invention;
Fig. 4 illustrates another example of a dental device according to one or more embodiments of the invention; and
Fig. 5 illustrates an example of a dental device according to one or more embodiments of the invention.

### DETAILED DESCRIPTION OF THE EMBODIMENTS

The invention will be described with reference to the Figs.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figs are merely schematic and are not drawn to scale. It should also be understood that the same reference numerals are used throughout the Figs to indicate the same or similar parts.

The invention provides a dental device for providing oral cleaning. The dental device comprises a mouthpiece for receiving a subject's teeth. The mouthpiece comprises a brushing portion for receiving a first set of the subject's teeth. The brushing portion comprises a plurality of brushing elements for providing oral cleaning. The mouthpiece further comprises a light treatment portion for receiving a second set of the subject's teeth. The light treatment portion comprises a light emitter for providing light treatment. The brushing portion and the light treatment portion are arranged such that, in use, the brushing elements are arranged outside of an optical path from the light emitter to the second set of the subject's teeth. That is, the brushing elements are arranged such that light from the light emitter can irradiate the second set of the subject's teeth without interruption by the brushing elements.

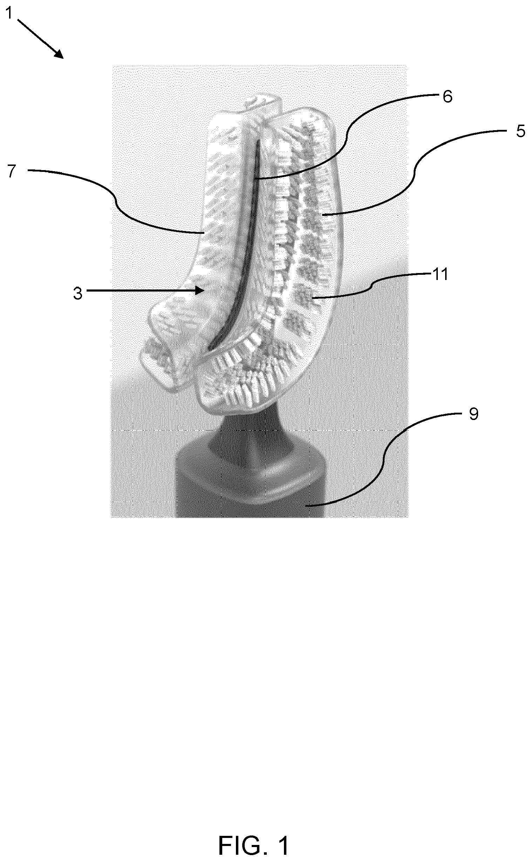

Fig. 1 illustrates a partial view of an example embodiment of a dental device 1 according to the invention. The mouthpiece 3 comprises two arched shaped (e.g., J-shaped) teeth-receiving portions - a first teeth receiving portion 5 for receiving the right-hand side maxillary quadrant of the user's teeth (and the left-hand side mandibular quadrant) and a second teeth receiving portion 7 for receiving the left-hand side maxillary quadrant of the user's teeth (and the right-hand side mandibular quadrant). The first and second teeth-receiving portions are mounted to the handle 9 by a mounting arrangement 6. Each the first and second 5, 7 teeth receiving portion comprises a channel. Brushing elements 11 (e.g., bristles) are attached to the walls of the channel. In use, the user inserts their teeth into the channel, so that the brushing elements may brush the user's teeth. Because each of the arched shaped portions only receives a subset of the maxillary or mandibular teeth, they are compact which can support convenient and comfortable cleaning. The first and second teeth receiving portions 5, 7 are mounted, back-to-back, to a handle 9. When the mouthpiece is inserted into the user's mouth, both the right-hand side maxillary quadrant and the right-hand side mandibular quadrant can be cleaned simultaneously (alternatively, both the left-hand side maxillary quadrant and the left-hand side mandibular quadrant can be cleaned simultaneously).

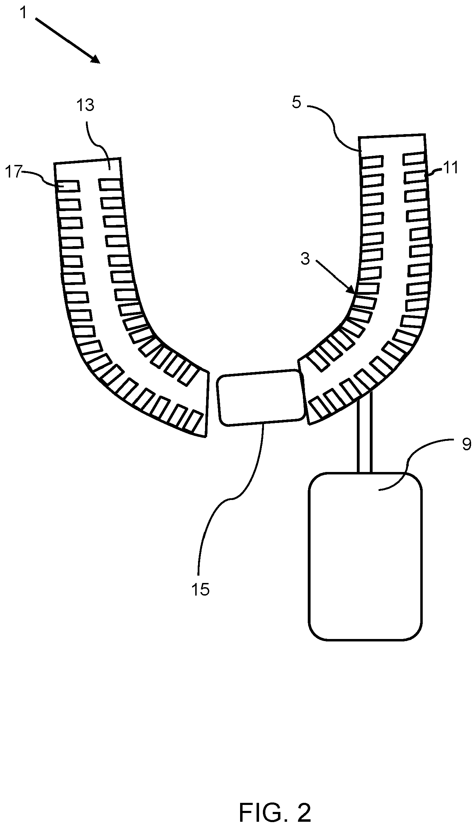

As shown in Fig. 2, the mouthpiece 3 further comprises a third teeth-receiving portion 13 which is attachable to the dental device 1 via a connector 15. The third teeth-receiving portion 13 is arched shaped (e.g., J-shaped) and comprises an array of light-emitting elements 17 for irradiating the user's teeth to provide oral care by light treatment. In use, when the mouthpiece is inserted into the user's mouth, with the third teeth-receiving portion 13 attached (directly or indirectly) to the first teeth-receiving portion 5 and the second teeth-receiving portion 7 by the connector 15.

The first and third teeth-receiving portions 5, 13 receive teeth associated with the same jaw (maximal or mandible). The second teeth-receiving portion receives teeth associated with the opposite jaw.

In some embodiments, the third teeth-receiving portion 13 is double-sided (i.e., it is shaped to receive teeth from both the jaws at the same time). Accordingly, the third teeth-receiving portion may comprise a light emitting arrangement on both sides.

The inventors have realized that providing a dental device that combines brushing with light treatment can provide a convenient way to achieve effective oral cleaning. In particular, the ability to carry out both brushing and light treatment using the same mouthpiece enables users to benefit from the additional advantages that light application can offer, whilst brushing is carried out (simultaneously).

Moreover, the inventors have realized that one difficulty in providing combined brushing and light treatment is that oral care treatment products (e.g., toothpaste) and brushing elements may block the optical path for light application, compromising the effectiveness/efficiency of the treatment. In particular, toothpaste foam is both scattering and absorbent. Both the scattering and absorption of light emitted by the light emitter reduce light transmittance in such a way that a layer of toothpaste foam (e.g., a 1 mm thick layer is toothpaste foam) is effectively impenetrable for light from light emitters typically used for oral care treatment. This can compromise the effectiveness of the light treatment to the extent that the potential benefit of light treatment is entirely lost.

Furthermore, the blocking effect of toothpaste is not homogeneously spread. Some areas will be covered in a thick layer, whereas other areas are only sparsely covered. Because of the brushing movements that take place, the spread of toothpaste changes dynamically.

The inventors have realised that reliable and effective treatment can be delivered by providing an arrangement in which the light emitter is not blocked by brushing elements. Further, reducing/avoiding blocking of the light emitter by oral care treatment products (e.g., toothpaste) promotes reliable and effective treatment. By providing an arrangement in which the brushing elements are arranged such that they do not interrupt light from the light emitter from irradiating the second set of the subject's teeth, treatment reliability and effectiveness can be improved.

In the arrangement shown in Fig. 1 and Fig. 2, the mouthpiece 3 comprises first and second teeth-receiving portions 5, 7 which each comprise brushing elements 11 for providing oral cleaning. The mouthpiece 3 also comprises the third teeth-receiving portion 13 which comprises a light emitter for providing a light treatment. The first and second teeth-receiving portions 5 ,7 and the third teeth-receiving portion 13 are arranged such that, in use, the brushing elements are arranged outside of an optical path from the light emitter to the teeth received by the third teeth-receiving portion 13. In particular, the brushing elements are only provided in the brushing portion and the light emitter is only provided in the light treatment portion.

Further, because the part of the device for providing light treatment is arranged on the other side of the user's mouth to the parts of the device providing treatment by brushing, minimal amounts of oral treatment product (e.g., toothpaste) will be present in the light path of the light emitter, facilitating better-controlled treatment. This arrangement underpins improved predictability of the light dose delivered during treatment. Additionally, this arrangement can increase the light intensity at the subject's teeth and/or gums (to achieve the same treatment effect with a relatively low treatment time).

Providing releasable attachment of the third teeth-receiving portion 13 to the rest of the dental device provides the user with improved flexibility. In particular, the user can choose to attach the light treatment portion to the rest of the mouthpiece if and when desired, enabling the user to choose to wear the third teeth-receiving portion 13 or not depending on whether light treatment is desired. This can help to improve user comfort and convenience. Furthermore, the light-treatment portion will typically have a longer lifetime than the portion comprising the brushing elements (which may, for example, need to be replaced every three months). Enabling detachment of the light treatment portion from the brushing portion provides a more sustainable device.

It will be appreciated that the third teeth-receiving portion 13 can be attached to the rest of the dental device 1 in any suitable way, so long as the attachment does not block light from the light emitting elements from reaching the second set of teeth. As discussed above, the attachment is releasable. For example, the third teeth-receiving portion 13 may be clipped to the first receiving portion or attached by a snap-fit connection. In addition to providing physical attachment of the third teeth-receiving portion 13 to the rest of the dental device 1, the connector 15 may provide an electrical and/or light guiding connection. For example, in embodiments in which the light source is external to the third teeth-receiving portion (e.g., the light source is integrated into the handle) the connector may provide a light-guiding connection between the light source and the light emitting elements.

The dental device may comprise a power source. The power source may be operably arranged to move the brushing elements during use, so as to brush the user's teeth, and to provide power to the light emitter. In some embodiments, the dental device comprises a transducer arrangement for moving the brushing elements. The power source is operably coupled to the transducer arrangement and the light emitter by a switching arrangement. The switching arrangement is configured to independently supply power to the transducer arrangement and the light emitter, such that the subject can use the brushing portion only, the light treatment portion only or a combination of both the brushing portion and the light treatment portion.

The power source may be provided in the handle 9 and connected to the mouthpiece via the stem. In embodiments in which the power source is provided in the handle, the connector may provide an electrical connection between the third teeth-receiving portion and the power source.

Alternatively, the power source may be configured to power the light emitter independently of the brushing elements. For example, the dental device 1 may comprise a battery (not shown) embedded in the third teeth-receiving portion. This may facilitate convenient charging of the light-treatment portion (i.e., independent charging from the brushing portion/s).

In either case, the power source is configured to allow the light emitter to be activated (turned on and off) independently of the brushing elements. In this way, the user has the flexibility to provide both light treatment and brushing with each use, or to provide one of light treatment and brushing without the other. For example, when the light treatment part has its own integrated battery, the dental device may comprise a dedicated activation member, which is operably connected to the power source and the light emitter to activate the light emitter. The activation member may be arranged on the surface of the teeth receiving portion contacted by the teeth in use (the "biting surface") for convenient activation.

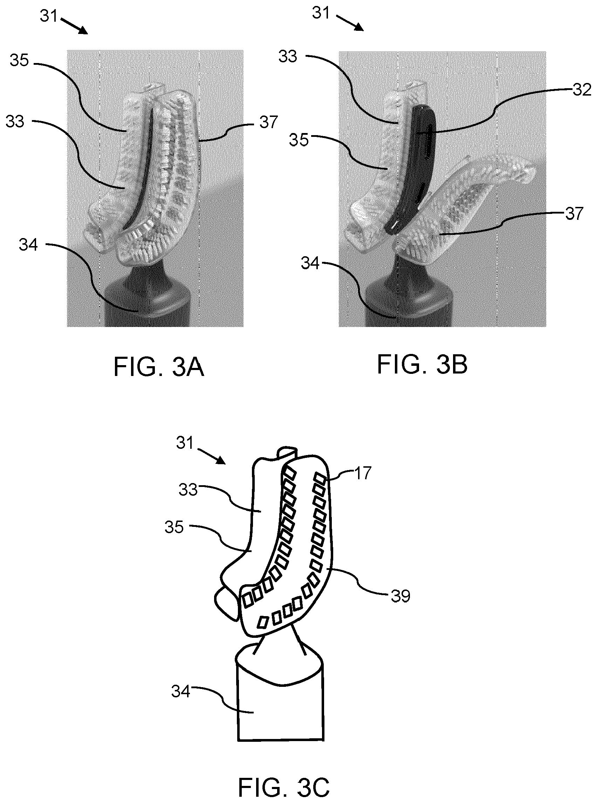

Fig. 3 shows another embodiment of a dental device 31. The dental device 31 has a similar structure to the dental device shown in Fig. 1 and Fig. 2 however, the manner of connecting the teeth-receiving portions to the rest of the dental device is different. The mouthpiece 33 comprises first and second teeth-receiving portions 35, 37 which each comprise brushing elements for providing oral cleaning. The first and second teeth-receiving portions 35, 37 are mounted to a mounting portion 32 attached to a handle 34. The handle 34 comprises a power source, which is operably coupled to a transducer arrangement for causing the brushing elements to move (and thereby brush the user's teeth). The dental device 31 further comprises a third teeth receiving portion 39 which is attachable to the mounting portion 32. The third teeth-receiving portion 39 comprises a light emitter for providing light treatment. The power source is also configured to supply power to the light emitter.

As illustrated, the dental device can be configured in multiple different configurations. In Fig. 3A, both the first and second teeth-receiving portions 35, 37 are comprise brushing elements and are mounted to the handle 34 so that, is use, each teeth-receiving portion 35, 37 can receive teeth (the different teeth-receiving portions receiving teeth from different sections of the user's mouth). As illustrated in Fig. 3B, the second teeth receiving portion is removably attached to the mounting portion 32. Accordingly, it can be removed and replaced by the third teeth-receiving portion 39 (as shown in Fig 3C). The third teeth-receiving portion 39 comprises a light emitter, the light emitter comprising an array of light emitting elements.

With this arrangement, during use, the teeth received in the brushing portion of the mouthp.iece (the first and/or second teeth-receiving portions 35, 37 - depending on which is attached to the mounting portion 32) are brushed. When the dental device 31 is in the configuration shown in Fig. 3C, the teeth received in the light treatment portion (the third teeth-receiving portion 39), on the opposite jaw, are subject to light treatment.

Additionally, or alternatively, both the first teeth receiving portion and the second teeth-receiving portion may be removably attached to the mounting portion 32. Accordingly, the first teeth receiving portion 35 can be removed and replaced by the third teeth-receiving portion 39.

For each quadrant of the user's mouth, a particular configuration of the first or second teeth-receiving portions and the third teeth-receiving portions is used. The user must alter the configuration multiple times to get a full mouth cleaning (by brushing) and full mouth treatment (by light treatment). For example, two sides can be treated with the same configuration, and then the user can switch the brushing portion and light treatment portion to work the other two quadrants.

In an example, the dental device 31 is used in the configuration shown in Fig. 3C. The teeth on the upper right side of the user's jaw are initially treated by the light treatment portion 39 while the teeth on the lower right side of the user's jaw are initially treated by the brushing portion 35. After these regions have been treated, the user moves the device to the other side of their mouth and treats the teeth of the upper left side of the user's jaw with the brushing portion 35 and the teeth of the lower left side of the user's jaw with the light treatment portion 39. Once this has been completed, the user replaces with brushing portion 35 with a light treatment portion (not shown) shaped similarly to the first teeth-receiving portion 35 and replaces the light treatment portion 39 with the second teeth-receiving portion 37.

Alternatively, in some embodiments, the dental device 1 comprises one teeth-receiving portion comprising brushing elements and one teeth-receiving portion comprising a light emitter. Each of the teeth-receiving portions is sufficiently flexible that it can be used on either side of the user's mouth. For example, where the mouthpiece is J-shaped, the mouthpiece can bend to form a mirrored J-configuration. This can avoid the need to reconfigure the dental device in order to achieve a full mouth cleaning and treatment.

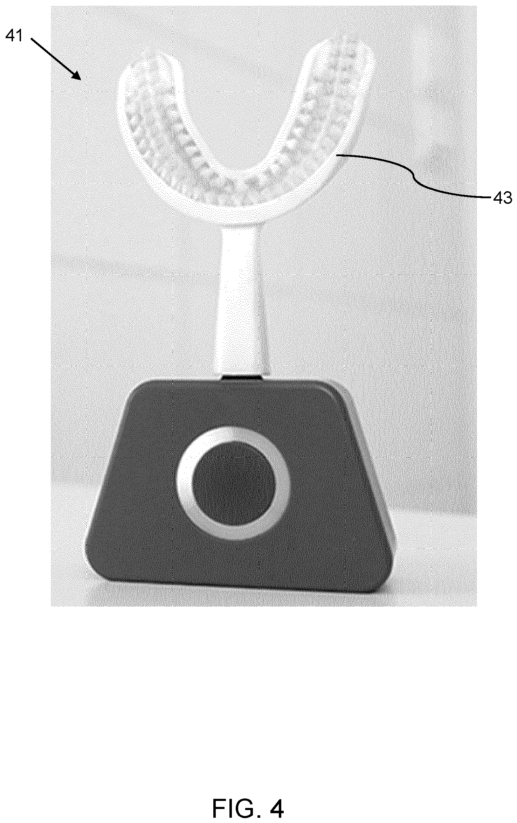

Fig. 4 shows front view of another embodiment of a dental device 41. The dental device 41 comprises a "C-shaped" (e.g., semi-circular) mouthpiece 43. The mouthpiece is dual-sided - it has teeth receiving portions on both sides (the front side and the rear side) of the mouthpiece.

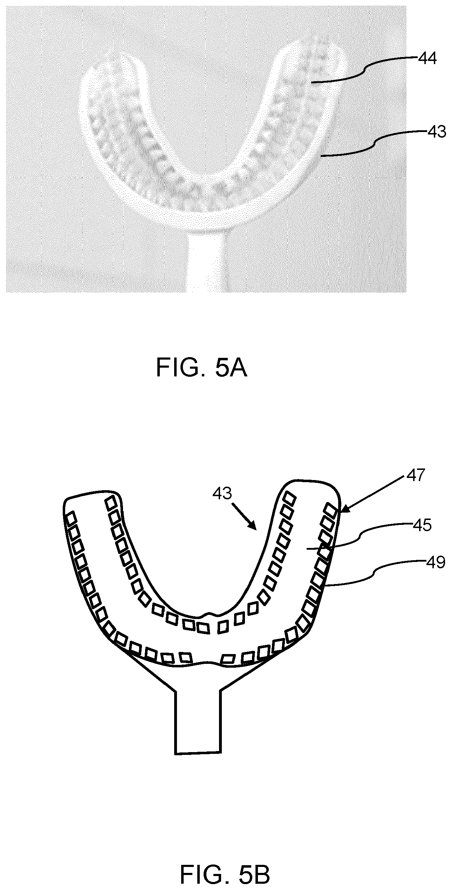

Fig. 5A shows front of the mouthpiece 43 of the dental device shown in Fig. 4, which comprises the brushing portion 44. The brushing portion comprises a recess for receiving the user's teeth and a plurality of brushing elements arranged inside the recess.

Fig. 5B shows a rear of the mouthpiece 43, opposite the front side. The rear side of the mouthpiece 43 comprises a light treatment portion 45. The light treatment portion comprises a recess for receiving the user's teeth and a light emitter 47 arranged inside the recess. The light emitter comprises an array of lighting emitting elements 49 configured to emit light suitable for providing oral care treatment. With this arrangement, the dental device 41 can be used to brush teeth belonging to one jaw (e.g., the upper jaw), whilst treating an area of the user's mouth (teeth, gums) corresponding to the other jaw (e.g., the lower jaw). With such an arrangement, the brushing elements do not block the optical path between the teeth received in the teeth-receiving recess of the brushing portion. Additionally, since an oral treatment product is typically used in combination with the part of the device that is brushing the teeth, the amount of oral treatment product present in the teeth-receiving recess of the light treatment portion is low.

In some embodiments, the dental device comprises a transducer arrangement for moving the brushing elements and a switching arrangement operably coupled to the power source, the transducer arrangement and the light emitter to independently supply power to the transducer arrangement and the light emitter.

It will be appreciated that in some embodiments the light emitter is a light source. In some other embodiments, the light emitter is a device (e.g., a light guide) arranged to receive light from a light source external to the light treatment portion and to emit the received light. In those embodiments, the light source may, for example, be incorporated in the handle.

It will be appreciated that although the light emitter is described as a light source comprising an array of light emitting elements, alternative light emitters may be provided. For example, in some embodiments the device comprises a laser and the light emitter comprises a structure for guiding light from the handle to the light treatment portion such that light it emitted at the light treatment portion.

It will be appreciated that although, in Fig. 1, the channel is shown to be formed by a continuous body, the channel need not have that particular form. In some embodiments, the channel may comprise a discontinuous body. That is, the walls of the channel may comprise a plurality of fingers separated by gaps.

The connector may provide a mechanical connection (e.g., snap-fit) or it may provide the connection in a different way (e.g., magnetic).

In some embodiments, the mounting arrangement comprises a single mount for mounting the mouthpiece to the handle. In some other embodiments, the mounting arrangement comprises a dedicated mounting portion for each teeth-receiving part. For example, the mounting arrangement may comprise a brushing part mounting portion for mounting the brushing portion to the device and a light treatment mounting portion for mounting the light treatment portion to the device.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A dental device for providing oral cleaning, the dental device comprising:
a mouthpiece for receiving a subject's teeth, the mouthpiece comprising:
a brushing portion, for receiving a first set of the subject's teeth, the brushing portion comprising a plurality of brushing elements for providing oral cleaning; and
a light treatment portion, for receiving a second set of the subject's teeth, the light treatment portion comprising a light emitter for providing light treatment;
wherein the brushing portion and the light treatment portion are arranged such that, in use, the brushing elements are arranged outside of an optical path between the light emitter and the second set of the subject's teeth.

2. The dental device of claim 1 wherein the brushing portion is arranged to receive teeth associated with a first jaw and the light treatment portion is arranged receive teeth associated with a second jaw.

3. The dental device of claim 2, wherein the brushing portion is shaped to receive a sub-set of teeth associated with the first jaw and the light treatment portion is shaped to receive a sub-set of teeth associated with the second jaw.

4. The dental device of claim 1, wherein the brushing portion and the light treatment portion are arranged to receive teeth associated with the same jaw.

5. The dental device of any of claims 1 to 4, further comprising a connector, wherein the connector is operable to attach the brushing portion and the light treatment portion together.

6. The dental device of any of claims 1 to 4, wherein the mouthpiece comprises a monolithic mouthpiece body and the brushing portion and the light treatment portion are regions of the mouthpiece body.

7. The dental device of claim 6, wherein the mouthpiece comprises a base, an upper teeth-receiving portion on a first side of the base, and a lower teeth receiving portion arranged on a second side of the base, wherein the upper teeth-receiving portion defines either the brushing portion or the light treatment portion and the lower teeth receiving portion defines the other of the brushing portion and the light treatment portion.

8. The dental device of any preceding claim, wherein the mouthpiece comprises an arc-shaped portion for receiving a subset of the subject's teeth, wherein the arc-shaped portion comprises a body of flexible material such that the arc-shaped portion is deformable, the arc-shaped portion having a first configuration, in which the arc-shaped portion is shaped to receive a sub-set of the subject's teeth associated with a first jaw and a second configuration in which the arc-shaped portion is shaped to receive a second sub-set of the subject's teeth associated with the first jaw.

9. The dental device of any preceding claim, wherein the brushing elements comprise bristles.

10. The dental device of any preceding claim, wherein the light emitter is configured to emit light at wavelengths for providing oral care.

11. The dental device of any preceding claim, further comprising a mounting arrangement for mounting the mouthpiece to a driving handle.

12. The dental device of any preceding claim, further comprising a power source coupled to the light emitter.

13. The dental device of claim 12, further comprising an attachment member for removably attaching the power source to the mouthpiece, wherein the attachment member is arranged to attach the power source to the mouthpiece.

14. The dental device of claim 12 or claim 13 further comprising a transducer arrangement for moving the brushing elements and a switching arrangement operably coupled to the power source, the transducer arrangement and the light emitter to independently supply power to the transducer arrangement and the light emitter.

15. The dental device of any preceding claim, wherein the light emitter comprises a light source arranged in the light treatment portion, and preferably wherein the light source comprises an LED array.
